# EUROPEAN PATENT APPLICATION

(11) **EP 3 013 082 A1**
(43) Date of publication of application: **27.04.2016**
(21) Application number: 14306667.8
(22) Date of filing: 20.10.2014
(51) Int. Cl.: H04W 8/08

(54) **SUPPORT OF IP ADDRESS PRESERVATION UPON MOBILITY TO A NON-3GPP ACCESS IN AN EVOLVED PACKET SYSTEM**

(71) Applicant: ALCATEL LUCENT, 92100 Boulogne-Billancourt (FR)
(72) Inventor: Landais, Bruno, 22304 LANNION (FR); Thiebaut, Laurent, 91620 NOZAY (FR); Drevon, Nicolas, 91620 NOZAY (FR); Liu, Jennifer, PLANO, TX Texas 75075-7839 (US)
(74) Representative: El Manouni, Josiane

(57) **Abstract**

The application relates to the problem of existing 3GPP (TS 23.401, TS 23.060) specifications that when a user establishes a PDN connection under GERAN/UTRAN, and then subsequently moves to E-UTRAN or to GERAN/UTRAN served by a S4-SGSN, the identity of the GGSN/PGW assigned to the PDN connection remains unknown to the HSS, which prevents any subsequent seamless WLAN offload of the traffic of these PDN connections - although the UE is now served by an MME or 54-SGSN which are expected to support seamless WLAN offload. This problem is solved in that either the target MME/S4-SGSN informs the HSS during mobility or the PGW/GGSN itself informs the HSS during PDN connection establishment.

## Description

The present invention generally relates to mobile communication networks and systems.

Descriptions of mobile networks and systems can be found in the literature, such as in particular in Technical Specifications published by standardization bodies such as for example 3GPP (3^{rd} Generation Partnership Project).

An example of 3GPP mobile system is EPS (Evolved Packet System). EPS is specified in particular in 3GPP TS 23.401. An EPS network comprises a Core Network CN, called EPC (Evolved Packet Core) that can be accessed by 3GPP access (such as E-UTRAN or UTRAN/GERAN) or by non-3GPP access (such as Trusted or untrusted WLAN). 3GPP access to EPC is specified in particular in 3GPP TS 23.401 for E-UTRAN access and in 3GPP TS 23.060 for GERAN/UTRAN access. Non-3GPP access to EPC is specified in particular in 3GPP TS 23.402.

In a system such as EPS, a User Equipment (UE) has access to at least one external IP network (also referred to as Packet Data Network PDN), via an EPS network providing IP connectivity (also referred to as PDN connectivity). A PDN connection is defined as an association between a UE represented by one IPv4 address and/or one IPv6 prefix and a PDN represented by a PDN identity called APN (Access point Name). Examples of PDNs include: Internet, Intranet, Operator's IP network e.g. IMS network, ...etc.

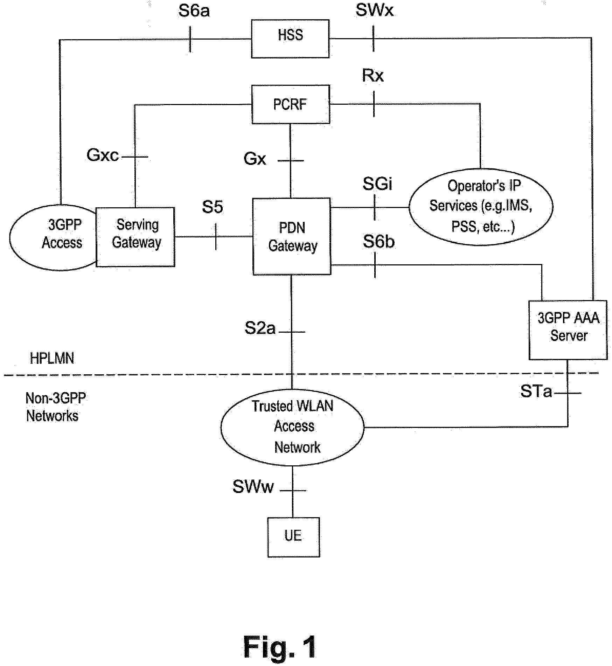

An example of architecture for 3GPP and non-3GPP (such as Trusted WLAN) access to EPC is illustrated in figure 1 taken from 3GPP TS 23.402.

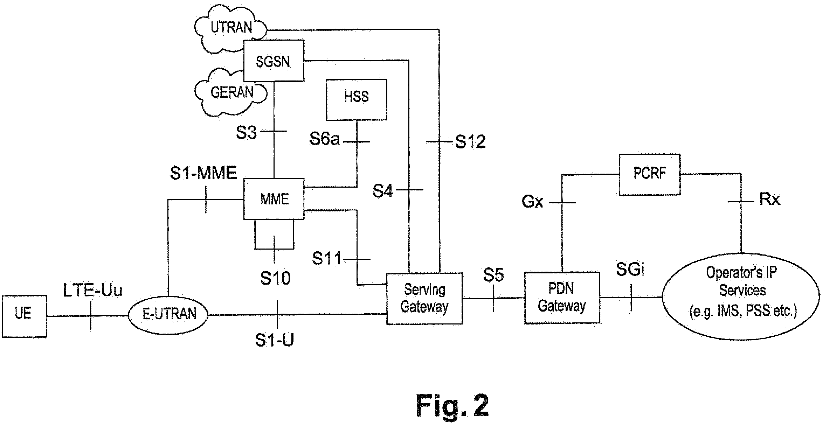

An example of architecture for 3GPP access (E-UTRAN or GERAN/UTRAN) to EPC is illustrated in figure 2 taken from 3GPP TS 23.401.

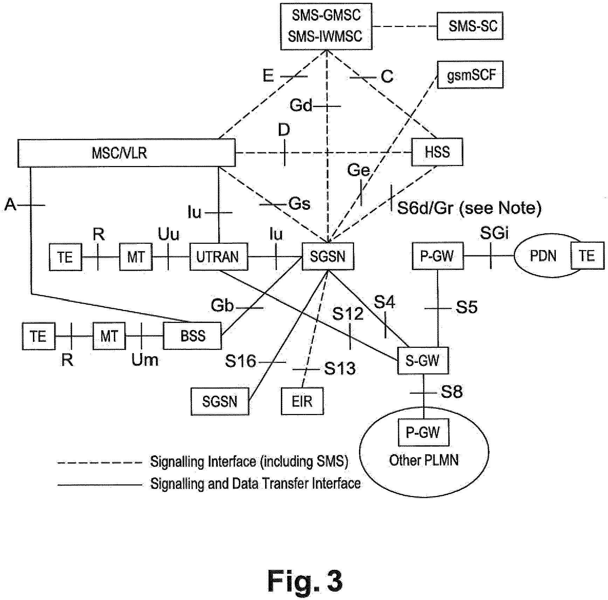

An example of architecture for 3GPP access (GERAN/UTRAN) to EPC is also illustrated in figure 3 taken from 3GPP TS 23.060.

EPC nodes in particular include: PDN Gateway (also called PDN GW in 3GPP TS 23.401, or PGW in 3GPP TS 23.060) interfacing with a PDN, and nodes (also called serving nodes) including Mobility Management Entity (MME) for E-UTRAN access or SGSN (supporting S4 interface and thus called S4 SGSN) for GERAN/UTRAN access.

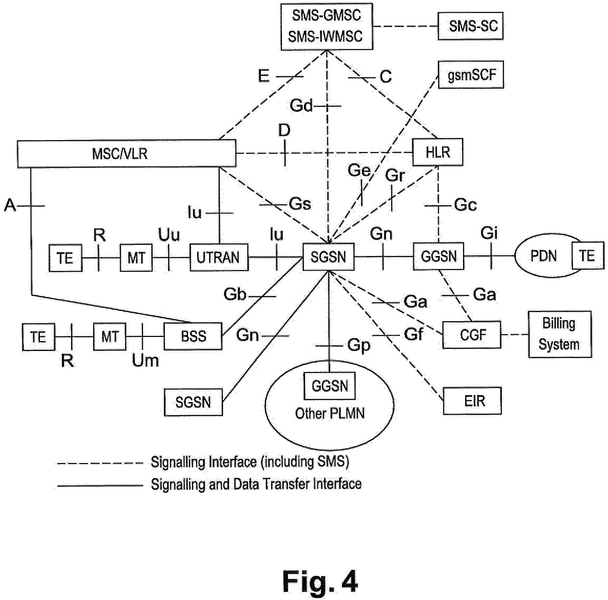

Another example of 3GPP mobile system is GSM/UMTS. An example of architecture for 3GPP access (GERAN/UTRAN) to GPRS Packet Core Network is illustrated in figure 4 taken from 3GPP TS 23.060.

GPRS Packet Core Network nodes in particular include: Gateway GPRS Support Node GGSN interfacing with a PDN, and Serving GPRS Support node SGSN (supporting Gn interface and thus called Gn SGSN).

A serving node (like MME, S4 SGSN or Gn SGSN) provides a number of control plane functions, including functions provided at PDN connection establishment (or PDP Context activation) via this serving node, functions provided at UE mobility (where this serving node can be either a source serving node or a target serving node), ....etc.

Offload mechanisms are now introduced in such mobile networks and systems, due to mobile data traffic explosion. For example, a system such as illustrated in figure 1 allows for such offloading of traffic from 3GPP access to Trusted WLAN access. From user's experience perspective, it is important that such offload (or mobility) to non-3GPP access be seamless, in other words it is important to allow for IP address preservation.

As recognized by the inventors and as will be explained with more detail later, with current 3GPP specifications such IP address preservation fails to be provided in all cases, which may lead to a degradation of user's experience in a non acceptable way. There is a need to solve such problem, more generally there is a need to improve mobility or offloading mechanisms in such networks and systems. Embodiments of the present invention in particular address such needs.

These and other objects are achieved, in one aspect, by a method for support of IP address preservation for a User Equipment upon mobility to a Non-3GPP access in an Evolved Packet System EPS, said method comprising:
- signalling, towards a Home Subscriber Server HSS, Packet Data Network PDN Gateway information for at least one PDN Gateway assigned at establishment, via a Serving GPRS Support Node SGSN supporting Gn interface referred to as Gn SGSN, of at least one PDN connection for said UE.

Here, the term "PDN Gateway" is used as a generic term covering the different terms PDN GW (used in particular 3GPP TS 23.401) and PGW/GGSN (used in particular in 3GPP TS 23.060), although in the description of embodiments and/or aspects of the invention such different terms may be used depending on the context. Also, here, the term "PDN connection" is used as a generic term covering the different terms PDN connection (used in particular 3GPP TS 23.401) and PDP context (used in particular in 3GPP TS 23.060), although in the description of embodiments and/or aspects of the invention such different terms may be used depending on the context.

These and other objects are achieved, in other aspects, by entities for performing related step(s) of such method, said entities including, in particular (though not exclusively), Mobility Management Entity MME, S4 SGSN (Serving GPRS Support Node), Home Subscriber Server HSS, PDN Gateway/Gateway GPRS Support Node PGW/GGSN, 3GPP AAA Server.

Some embodiments of apparatus and/or methods in accordance with embodiments of the present invention are now described, by way of example only, and with reference to the accompanying drawings, in which:
- Figure 1 is intended to recall an example of architecture for 3GPP and Non 3GPP access to EPC, for the case of Non 3GPP access corresponding to Trusted WLAN access,
- Figure 2 is intended to recall an example of architecture for 3GPP (E-UTRAN, GERAN/UTRAN) access to EPC,
- Figure 3 is intended to recall an example of architecture for 3GPP (GERAN/UTRAN) access to EPC,
- Figure 4 is intended to recall an example of architecture for GSM/UMTS including GERAN/UTRAN access to GPRS Packet Core Network,
- Figure 5 is intended to illustrate a first example of signaling flow according to embodiments of the invention,
- Figure 6 is intended to illustrate a second example of signaling flow according to embodiments of the invention,
- Figure 7 is intended to illustrate a third example of signaling flow according to embodiments of the invention.

To cope with the traffic explosion in mobile operator networks, 3GPP has specified since Release 10 several features allowing to offload part of the traffic (e.g. Internet) from the operator's radio and/or core network: Mobility with Un-trusted NON 3GPP access with IP address preservation (Rel8/Rel-9), Non-seamless WLAN offload (Rel-10), Trusted WLAN access (SaMOG, Rel-11, only 1 PDN connection, no IP address preservation upon mobility with 3GPP accesses), Enhanced Trusted WLAN Access (eSaMOG, Rel-12, multiple PDN connections, with IP address preservation upon mobility with 3GPP accesses).

WLAN offload (with IP address preservation) is achieved by anchoring user's PDN connection(s) at a PGW (Packet Data Gateway), accessible via an SGW (Serving GW) when the UE is under a 3GPP access (GSM, UMTS, LTE), or via a TWAN GW (Trusted WLAN GW) or ePDG (for untrusted WLAN access). During the establishment of the PDN connection via a 3GPP access, the MME (for LTE access) or the S4-SGSN (for a GSM/UMTS access) registers in the HSS the identity of the PGW (i.e. IP address or FQDN) assigned to the user's PDN connection - so either during the Attach procedure (MME), the UE requested PDN connectivity request procedure (MME) or PDP Context Activation procedure (S4-SGSN). During the establishment of the PDN connection via a non-3GPP access (e.g. WLAN access), the PGW registers its own identity to a 3GPP AAA Server (via a 3GPP AAA Proxy in roaming scenario) which pushes this information to the HSS. So when the UE subsequently moves the PDN connection to a different access (e.g. LTE to WLAN or vice-versa), the target access network retrieves the PGW identity assigned to the PDN connection from the HSS, and selects the same PGW to enable to preserve the IP address of the user's PDN connection, thus providing seamless mobility.

Per existing 3GPP specifications/architecture, seamless WLAN offload (with IP address preservation) is only supported with MME and S4-SGSN, i.e. is not supported with Gn-SGSN (a Gn SGSN does not update the HSS with the identity of the GGSN assigned to the PDN connection). An UE served by a Gn-SGSN cannot seamlessly (i.e. with IP address preservation) offload its traffic to WLAN and vice-versa. Embodiments of the invention do not aim at solving these limitations (which correspond to a past 3GPP decision).

But when a user establishes a PDN connection under GERAN/UTRAN via a Gn-SGSN, and then subsequently moves to E-UTRAN (i.e. using Tracking Area Update or Handover procedures) or to GERAN/UTRAN served by an S4-SGSN (i.e. using Routing Area Update or Handover procedures), the identity of the GGSN/PGW assigned to the PDN connection remains unknown to the HSS, which prevents any subsequent seamless WLAN offload of the traffic of these PDN connections-although the UE is now served by an MME or S4-SGSN which are expected to support seamless WLAN offload. This implies that seamless WLAN offload is supported only for PDN connections established via an MME or S4-SGSN.

Gn-SGSNs are and will remain widely deployed many years in most of mobile networks, i.e. a full migration of all legacy Gn SGSN to S4-SGSN will take many years. The above issues prevent seamless WLAN offload from LTE or UTRAN/GERAN, for all PDN connections established via a Gn-SGSN, thus preventing operators to offload their networks from low-value traffic (e.g. Internet), providing a degraded and inconsistent service experience (depending on the access when the PDN connection is established) and preventing usage of the recent 3GPP features (e.g. eSAMOG) until PS core networks are fully migrated to S4-SGSNs (and MMEs). The user experience is in particular degraded in case of e.g. VPN or https session (used for banking transactions) as the VPN or the https session are released when the PDN connection is offloaded to WLAN.

The above limitations will be prejudiciable to the use of WLAN access if seamless WLAN offload cannot be supported for a long time.

In the above introduction the example case of non-3GPP access corresponding to WLAN access has more particularly been considered; however embodiments of the invention are not limited to this example case.

A possible solution to the problems presented above would be to consider that operators have to migrate all their Gn-SGSNs to S4-SGSNs. But such a migration will take many years, and several operators have already claimed that they don't plan to do such migration.

Another possible solution would be that 3GPP specifications would be updated in order for the PGW id to be registered in the HSS during the setup of the PDN connection via the Gn-SGSN. This could be done by the Gn SGSN registering the PGW ID (for the requested APN) to the HSS in the same manner as done by an MME or S4-SGSN. This approach was already disregarded though by 3GPP in the past (e.g. to avoid impacting legacy Gn SGSN). This would furthermore raise issues when the HSS (dealing with Non 3GPP nodes and MME) is split from the legacy HLR (dealing only with Gn-SGSN).

There is a need for different approach(es), in particular avoiding such drawbacks. Embodiments and/or aspects of the invention in particular address such needs.

Before presenting various embodiments and/or aspects of the invention, current network behavior (based on current 3GPP specifications) is briefly recalled.

As per 3GPP TS 23.401, 23.060 and 23.402, during the establishment of a PDN connection, if the subscription data indicates that the user is allowed to perform handover to non-3GPP accesses and if the MME or S4-SGSN selected a PDN GW that is different from the PDN GW identity which was indicated by the HSS in the PDN subscription context, the MME or S4-SGSN shall send a Notify message, including the PDN GW identity, the APN and information identifying the PLMN in which the PDN GW is located, to the HSS for mobility with non-3GPP accesses.

See 3GPP TS 23.402 subclause 12.1.5:
"In case of initial attach, or UE requested PDN connectivity, in the 3GPP access, the SGSN/MME updates the HSS with the PDN GW identity of the selected PDN GW and the APN associated with the UE's PDN connection. If a 3GPP AAA Server is registered in the HSS for the same UE, the HSS provides the updated APN and PDN GW identity information to the 3GPP AAA Server. If NBM is used for establishing connectivity in the non-3GPP access, the 3GPP AAA Server notifies the changes to the non-3GPP access network. This procedure is used for PDN GW registration."

See 3GPP TS 23.401
- subclause 5.3.2.1 (E-UTRAN Initial Attach): step 25
   "After the MME receives Modify Bearer Response (EPS Bearer Identity) message, if Request Type does not indicate handover and an EPS bearer was established and the subscription data indicates that the user is allowed to perform handover to non-3GPP accesses, and if the MME selected a PDN GW that is different from the PDN GW identity which was indicated by the HSS in the PDN subscription context, the MME shall send a Notify Request including the APN and PDN GW identity to the HSS for mobility with non-3GPP accesses. The message shall include information that identifies the PLMN in which the PDN GW is located."
- subclause 5.10.2 (UE requested PDN connectivity): step 15 with the same statement

See 3GPP TS 23.060
- subclause 9.2.2.1 (PDP Context Activation): step D)
   "The HSS stores the PDN GW identity and the associated APN, and sends an Update Location Response to the SGSN.
   If the S6d interface is used between an S4-SGSN and HSS, the messages "Update Location Request" and "Update Location Response" shall be replaced with "Notify Request" and "Notify Response"."

But current 3GPP specifications do not foresee to update the HSS with the PGN GW identity (ies) of the user's PDN connection(s) during mobility from Gn-SGSN to MME or S4-SGSN:
See 3GPP TS 23.402 subclause 12.1.5 (quoted above).
See 3GPP TS 23.401 Annex D.3.4 (Gn SGSN to MME handover)
See 3GPP TS 23.401 Annex D.3.6 (Gn SGSN to MME Tracking Area

Update)

See 3GPP TS 23.060 subclause 6.9.1.2.2 (Inter-SGSN Routing Area Update)

Various embodiments and/or aspects of the present invention will now be presented.

One or more of following embodiments and/or aspects, also referred to as first solution, may be provided.

In an embodiment, upon mobility (Tracking Area Update, Routing Area Update or Handover) from a Gn SGSN to an MME or S4-SGSN, the target MME or S4-SGSN registers in the HSS the identity of the GGSN/PGW for the user's PDN connections retrieved from the source Gn SGSN, as if these PDN connections had been established via the MME or S4-SGSN, if not already done before (e.g. during a previous mobility to an MME or S4-SGSN). This allows then to support seamless WLAN offload when the user subsequently moves towards WLAN, as per existing 3GPP procedures even if the PDN connection was established via a Gn SGSN.

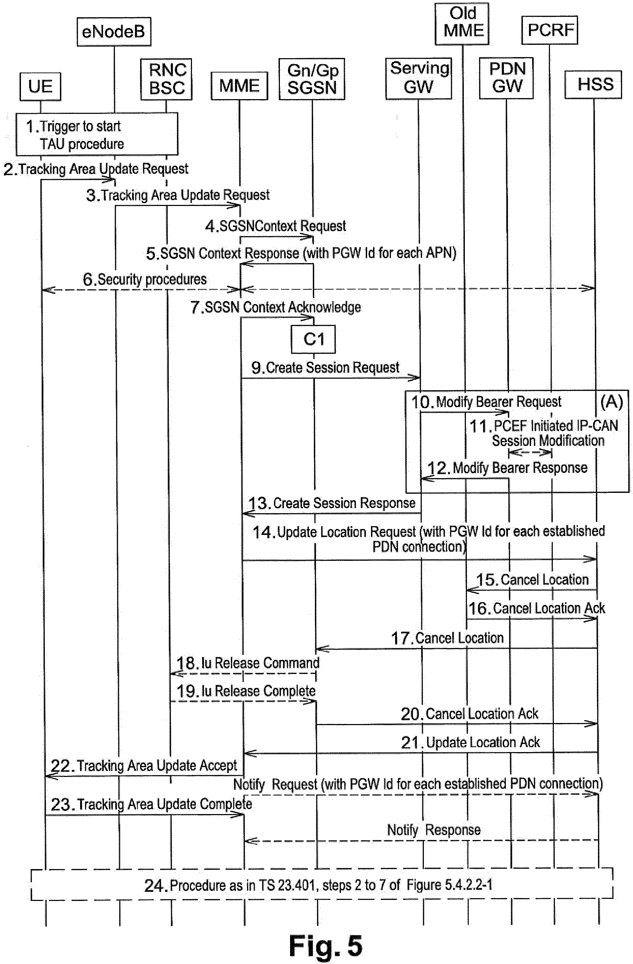

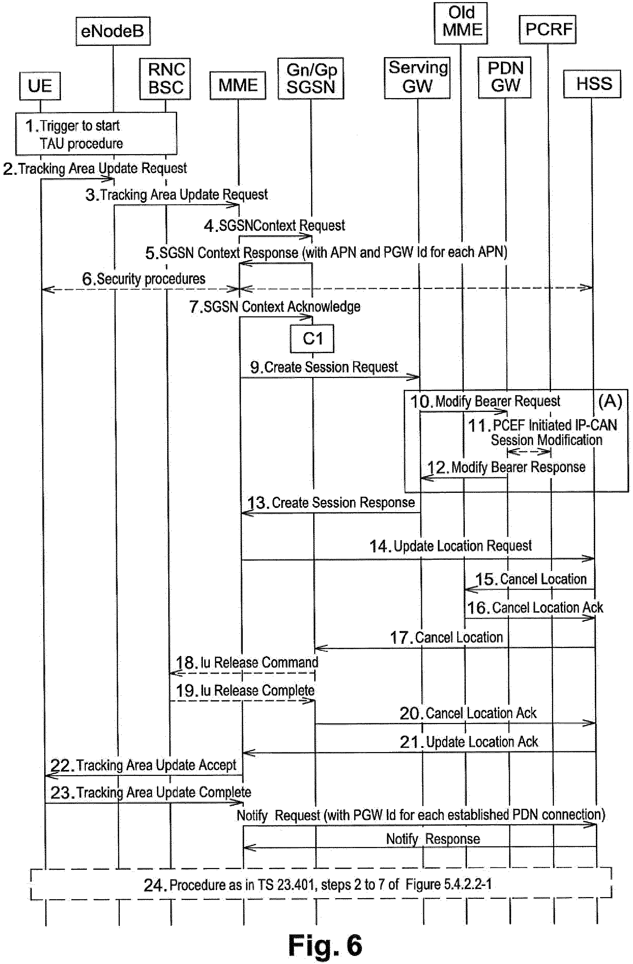

In some embodiments, part or all of following steps (which may include various options) may be provided.
1) the target MME or S4-SGSN receives the PDN connection contexts from the source Gn SGSN via GTPv1 as currently specified in 3GPP TS 29.060: i.e. within the Forward Relocation Request message (handover, see subclause 7.5.6) or SGSN Context Response (Tracking Area Update or Routing Area Update, see subclause 7.5.4).
   The contexts are transferred via the PDP Context IE (see subclause 7.7.29), which contains the APN. The Co-located GGSN-PGW FQDN IE (see subclause 7.7.90) contains, for each PDP context, the identity of the combo GGSN/PGW assigned to the user's PDN connection.
2) the target MME and S4-SGSN registers in the HSS the PDN GW Identity for each of the user's PDN connections transferred from the Gn SGSN. This is a new requirement. This can be done by e.g.:
   a) the MME or S4-SGSN newly including the PDN GW ID(s) assigned to the user's PDN connection(s) (as received from the Gn SGSN) in the Update Location Request message they send to the HSS, with the associated APN but without providing the Context Identifier identifying the APN configuration profile in the user's subscription. The HSS derives the APN Configuration profile from the APN and updates the PGW Id in its own record.
      Note 1: this is similar to the MME/S4-SGSN including the Active APN AVP with the same information in the Update Location Request (see 3GPP TS 29.272 subclause 5.2.1.1.1) following a HSS Reset procedure to restore the data in the HSS, but in that use case, the MME/S4-SGSN can (and shall) provide the Context Identifier identifying the APN configuration profile.
      If the HSS does not support this extension of the Update Location Request message, the MME or S4-SGSN proceeds as described in b). The MME or S4-SGSN can detect that the HSS does not support the extension e.g. by the HSS including a new feature tag in the Update Location Answer if it supports the feature, or by the MME/S4-SGSN checking the user's subscription downloaded from the HSS i.e. whether the PGW Id has been updated for each APN.
      This "option a)" is illustrated in figure 5, e.g. taking the example of the Gn SGSN to MME Tracking Area Update procedure currently specified in 3GPP TS 23.401 Annex D.3.6. This procedure would then be modified to add PDN Gateway information (such as PGW id (PGW identity) for each established PDN connection) to the Update Location Request message sent by the MME to the HSS at step 14.
      Note 2: an Update Location Request/Answer exchange always take place after a mobility from a Gn SGSN to an MME/S4-SGSN - this is because the HSS sends a Cancel Location to any previous MME when the UE is served by a Gn SGSN. Thus the procedure does not require extra messaging (between the MME and HSS) but requires a slight HSS change
      Or
   b) by the MME or S4-SGSN sending a Notify message to the HSS after the Update Location Request/Answer exchange (as currently done during E-UTRAN Attach, UE requested PDN connectivity or PDP Context Activation), if the subscription data indicates that the user is allowed to perform handover to non-3GPP accesses and if the PDN GW assigned to the user's PDN connection (as received from the Gn SGSN) is different from the PDN GW identity which was indicated by the HSS in the PDN subscription context.
      This "option b)" is illustrated in figure 6, e.g. taking the example of the Gn SGSN to MME Tracking Area Update procedure currently specified in 3GPP TS 23.401 Annex D.3.6. This procedure would then be modified to add a Notify Request message from MME to HSS after step 21, this Notify Request message containing PDN Gateway information (such as APN and PGW id (PGW identity) for each APN).
      Note 3: updating the PGW Identity in the HSS may only be required the first time the UE moves from Gn SGSN to MME/S4-SGSN. If the UE moves back then to the Gn SGSN, and then again to the MME or S4-SGSN, the HSS will already contain the correct PGW identity upon this second mobility from Gn SGSN to MME/S4-SGSN. This means that the extra message (Notify) would be needed only once in the life time of the PDN connection
      Note 4: UEs are expected to keep their connections established for long (cf "always on"). So adding one single extra Notify during the very first mobility from Gn SGSN to MME/S4-SGSN has negligible effect on the overall signalling.
      Although the Gn SGSN to MME Tracking Area Update procedure has been considered above by way of example, other procedures could of course be considered, such as Gn SGSN to MME handover, or Inter-SGSN (from Gn SGSN to S4 SGSN) Routing Area Update or Handover. Modifications such as illustrated in figures 5 and 6 for the Gn SGSN to MME Tracking Area Update procedure would apply to these procedures.
3) upon subsequent mobility from the S4-SGSN or MME, e.g. towards WLAN, the procedures specified currently in 3GPP apply, allowing seamless WLAN offload.

This first solution thus presents minimum impacts to EPC:
With option a), some minimum changes to MME, S4-SGSN and HSS and no extra message required between these functional entities.
With option b), some even lighter changes to MME and S4-SGSN. No HSS impacts (may thus be a preferred solution).

One or more of following embodiments and/or aspects, also referred to as second solution, may be provided.

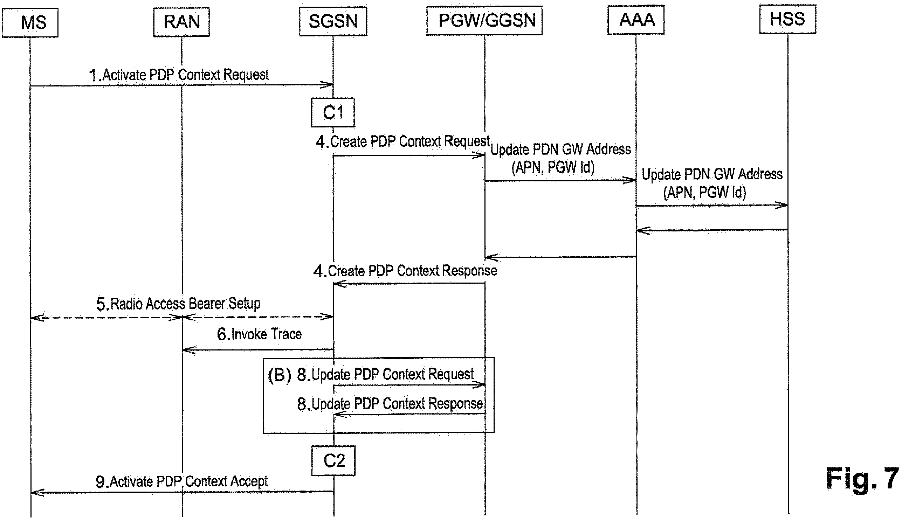

In an embodiment, to avoid Gn SGSN impacts, the GGSN/PGW could register its PGW identity to the HSS during the establishment of the PDN connection with the Gn SGSN, via the 3GPP AAA - Server, as shown in Figure 7, with the GGSN/PGW indicating this is for 3GPP access. The indication this is for 3GPP access may e.g. be used for the AAA server to not consider this as an error due to the absence of a context for the UE associated with a Non 3GPP access (SWm/STa). The AAA server, when it reports the PGW identity to the HSS, also indicates this is for 3GPP access in order e.g. for the HSS to not consider this as an error: current 3GPP specification 29.273 consider this an error when the AAA server that is not already registered in HSS issues a PGW_UPDATE

When this IE [Server-Assignment-Type] contains PGW_UPDATE value, the HSS shall check if the stored 3GPP AAA server name is the currently registered 3GPP AAA server for this same user and shall update the PGW identity for the non-3GPP user.

The GGSN/PGW would do this only for PDP context created by Gn SGSN i.e. via Gn/Gp (GTPv1 -C).

Figure 7 illustrates a PDP Context Activation procedure. Such procedure is currently specified in 3GPP TS 23.060, and would then be modified to add following signaling messages at step 4:
Upon reception of a Create PDP Context Request message at step 4, a PGW/GGSN (i.e. a node that supports both the behavior of a GGSN and the behavior of a PGW) sending an Update PDN GW Address message containing PDN Gateway information (such as APN, PGW Id) to 3GPP AAA Server,
Upon reception of an Update PDN GW Address message, 3GGP AAA Server sending a Update PDN GW Address containing PDN Gateway information (such as APN, PGW Id) to HSS,
Acknowledgement of reception of the Update PDN GW Address message by HSS to 3GPP AAA Server
Acknowledgement of reception of the Update PDN GW Address message by 3GPP AAA Server to GGSN.

Then upon subsequent mobility from Gn SGSN to MME or S4-SGSN, the target MME or S4-SGSN behaves as per existing specifications, i.e. they do not need to update the HSS about the PGW identity (since already done when the UE was served by the Gn SGSN).

This second solution would impact the GGSN/PGW, 3GPP AAA server and HSS -thus the first solution above might be preferred.

In one aspect, there is provided a method for support of IP address preservation for a User Equipment upon mobility to a Non-3GPP access in an Evolved Packet System EPS.

Various embodiments are provided, which may be taken alone or in combination, according to various combinations, including (though not limited to) following embodiments.

In an embodiment, said method comprises:
- signalling, towards a Home Subscriber Server HSS, Packet Data Network PDN Gateway information for at least one PDN Gateway assigned at establishment, via a Serving GPRS Support Node SGSN supporting Gn interface referred to as Gn SGSN, of at least one PDN connection for said UE.

In an embodiment, said method comprises:
- a Mobility Management Entity MME signalling to said HSS said PDN Gateway information retrieved upon mobility of said UE from said Gn SGSN to said MME.

In an embodiment, said method comprises:
- a Serving GPRS Support Node SGSN, referred to as S4 SGSN, supporting S4 interface, signalling to said HSS said PDN Gateway information retrieved upon mobility of said UE from said Gn SGSN to said S4 SGSN.

In an embodiment, said method comprises:
- a Mobility Management Entity MME signalling to said HSS, in a Update Location Request message, said PDN Gateway information retrieved upon mobility of said UE from said Gn SGSN to said MME.

In an embodiment, said method comprises:
- a Serving GPRS Support Node SGSN, referred to as S4 SGSN, supporting S4 interface, signalling to said HSS, in a Update Location Request message, said PDN Gateway information retrieved upon mobility of said UE from said Gn SGSN to said S4 SGSN.

In an embodiment, said method comprises:
- a Mobility Management Entity MME signalling to said HSS, in a Notify Request message, said PDN Gateway information retrieved upon mobility of said UE from said Gn SGSN to said MME, if the subscription data indicates that the user is allowed to perform handover to non-3GPP accesses, and if said PDN Gateway information is different from the PDN Gateway information which was indicated by the HSS in the PDN subscription context of said UE.

In an embodiment, said method comprises:
- a Serving GPRS Support Node SGSN, referred to as S4 SGSN, supporting S4 interface, signalling to said HSS, in a Notify Request message, said PDN Gateway information retrieved upon mobility of said UE from said Gn SGSN to said S4 SGSN, if the subscription data indicates that the user is allowed to perform handover to non-3GPP accesses, and if said PDN Gateway information is different from the PDN Gateway information which was indicated by the HSS in the PDN subscription context of said UE.

In an embodiment, said method comprises:
- a Mobility Management Entity MME retrieving said PDN Gateway information from information such as UE Context information contained in a message received from said Gn SGSN, such as Forward Relocation Request message or SGSN Context Response message, upon mobility of said UE from said Gn SGSN to said MME.

In an embodiment, said method comprises:
- a Serving GPRS Support Node SGSN, referred to as S4 SGSN, supporting S4 interface, retrieving said PDN Gateway information from information such as UE Context information contained in a message received from said Gn SGSN, such as Forward Relocation Request message or SGSN Context Response message, upon mobility of said UE from said Gn SGSN to said S4 SGSN.

In an embodiment, said method comprises:
- upon establishment of a PDN connection via said Gn SGSN, an assigned Gateway GPRS Support Node GGSN signalling said PDN Gateway information to a 3GPP AAA Server, with an indication that this is for 3GPP access.

In an embodiment, said method comprises:
- upon reception of said PDN Gateway information from a Gateway GPRS Support Node GGSN, a 3GPP AAA Server signalling said PDN Gateway information to said HSS, with an indication that this is for 3GPP access.

In an embodiment, said method comprises:
- upon reception of said signalled PDN Gateway information, said HSS storing said PDN Gateway information.

In an embodiment, said method comprises:
- said PDN Gateway information includes, for said at least one PDN connection, a PDN identity or Access Point Name APN, and a PDN Gateway identity.

Other aspects relate to entities for performing related step(s) of such method, said entities including, in particular (though not exclusively), Mobility Management Entity MME, S4 SGSN (Serving GPRS Support Node), Home Subscriber Server HSS, PDN Gateway/Gateway GPRS Support Node PGW/GGSN, 3GPP AAA Server.

In an aspect, there is provided a Mobility Management Entity MME.

Various embodiments are provided, which may be taken alone or in combination, according to various combinations, including (though not limited to) following embodiments.

In an embodiment, said MME is configured to:
- signal to a Home Subscriber Server HSS, PDN Gateway information for at least one PDN Gateway assigned to a User Equipment UE, retrieved from a Gn SGSN upon mobility of said UE from said Gn SGSN to said MME.

In an embodiment, said MME is configured to:
- signal said PDN Gateway information to said HSS in a Update Location Request message.

In an embodiment, said MME is configured to:
- signal said PDN Gateway information to said HSS in a Notify Request message, if the subscription data indicates that the user is allowed to perform handover to non-3GPP accesses, and if said PDN Gateway information is different from the PDN Gateway information which was indicated by the HSS in the PDN subscription context of said UE.

In an aspect, there is provided a Serving GPRS Support Node SGSN supporting S4 interface, referred to as S4 SGSN.

Various embodiments are provided, which may be taken alone or in combination, according to various combinations, including (though not limited to) following embodiments.

In an embodiment, said S4 SGSN is configured to:
- signal to a Home Subscriber Server HSS, PDN Gateway information for at least one PDN Gateway assigned to a User Equipment UE, retrieved from a Gn SGSN upon mobility of said UE from said Gn SGSN to said S4 SGSN.

In an embodiment, said S4 SGSN is configured to:
- signal said PDN Gateway information to said HSS in a Update Location Request message.

In an embodiment, said S4 SGSN is configured to:
- signal said PDN Gateway information to said HSS in a Notify Request message, if the subscription data indicates that the user is allowed to perform handover to non-3GPP accesses, and if said PDN Gateway information is different from the PDN Gateway information which was indicated by the HSS in the PDN subscription context of said UE.

In an aspect, there is provided a Home Subscriber Server HSS.

Various embodiments are provided, which may be taken alone or in combination, according to various combinations, including (though not limited to) following embodiment.

In an embodiment, said HSS is configured to:
- upon reception of said signalled PDN Gateway information, storing said PDN Gateway information when said signalled PDN Gateway information has been received in an Update Location or received from AAA server about an UE served by a 3GPP access.

In an aspect, there is provided a PDN Gateway/Gateway GPRS Support Node PGW/GGSN.

Various embodiments are provided, which may be taken alone or in combination, according to various combinations, including (though not limited to) following embodiment.

In an embodiment, said PGW/GGSN is configured to:
- upon activation via a Gn SGSN of a PDP context assigning said PGW/GGSN to a User Equipment UE, signal to a 3GPP AAA Server PDN Gateway information including Access Point Name APN and PGW/GGSN identity, with an indication that this is for 3GPP access.

In an aspect, there is provided a 3GPP AAA Server.

Various embodiments are provided, which may be taken alone or in combination, according to various combinations, including (though not limited to) following embodiment.

In an embodiment, said 3GPP AAA Server is configured to:
- upon reception from a Gateway GPRS Support Node GGSN of PDN Gateway information including Access Point Name APN and GGSN identity, signal said PDN Gateway information to a Home Subscriber Server HSS, with an indication that this is for 3GPP access.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for support of IP address preservation for a User Equipment upon mobility to a Non-3GPP access in an Evolved Packet System EPS, said method comprising:
- signalling, towards a Home Subscriber Server HSS, Packet Data Network PDN Gateway information for at least one PDN Gateway assigned at establishment, via a Serving GPRS Support Node SGSN supporting Gn interface referred to as Gn SGSN, of at least one PDN connection for said UE.

2. A method according to claim 1, comprising:
- a Mobility Management Entity MME signalling to said HSS said PDN Gateway information retrieved upon mobility of said UE from said Gn SGSN to said MME.

3. A method according to claim 1, comprising:
- a Serving GPRS Support Node SGSN, referred to as S4 SGSN, supporting S4 interface, signalling to said HSS said PDN Gateway information retrieved upon mobility of said UE from said Gn SGSN to said S4 SGSN.

4. A method according to any of claims 1 to 2, comprising:
- a Mobility Management Entity MME signalling to said HSS, in a Update Location Request message, said PDN Gateway information retrieved upon mobility of said UE from said Gn SGSN to said MME.

5. A method according to claims 1 to 3, comprising:
- a Serving GPRS Support Node SGSN, referred to as S4 SGSN, supporting S4 interface, signalling to said HSS, in a Update Location Request message, said PDN Gateway information retrieved upon mobility of said UE from said Gn SGSN to said S4 SGSN.

6. A method according to any of claims 1 to 5, comprising:
- a Mobility Management Entity MME signalling to said HSS, in a Notify Request message, said PDN Gateway information retrieved upon mobility of said UE from said Gn SGSN to said MME, if the subscription data indicates that the user is allowed to perform handover to non-3GPP accesses, and if said PDN Gateway information is different from the PDN Gateway information which was indicated by the HSS in the PDN subscription context of said UE.

7. A method according to any of claims 1 to 6, comprising:
- a Serving GPRS Support Node SGSN, referred to as S4 SGSN, supporting S4 interface, signalling to said HSS, in a Notify Request message, said PDN Gateway information retrieved upon mobility of said UE from said Gn SGSN to said S4 SGSN, if the subscription data indicates that the user is allowed to perform handover to non-3GPP accesses, and if said PDN Gateway information is different from the PDN Gateway information which was indicated by the HSS in the PDN subscription context of said UE.

8. A method according to any of claims 1 to 7, comprising:
- a Mobility Management Entity MME retrieving said PDN Gateway information from information such as UE Context information contained in a message received from said Gn SGSN, such as Forward Relocation Request message or SGSN Context Response message, upon mobility of said UE from said Gn SGSN to said MME.

9. A method according to any of claims 1 to 8, comprising:
- a Serving GPRS Support Node SGSN, referred to as S4 SGSN, supporting S4 interface, retrieving said PDN Gateway information from information such as UE Context information contained in a message received from said Gn SGSN, such as Forward Relocation Request message or SGSN Context Response message, upon mobility of said UE from said Gn SGSN to said S4 SGSN.

10. A method according to claim 1, comprising:
- upon establishment of a PDN connection via said Gn SGSN, an assigned Gateway GPRS Support Node GGSN signalling said PDN Gateway information to a 3GPP AAA Server, with an indication that this is for 3GPP access.

11. A method according to any of claims 1 and 10, comprising:
- upon reception of said PDN Gateway information from a Gateway GPRS Support Node GGSN, a 3GPP AAA Server signalling said PDN Gateway information to said HSS, with an indication that this is for 3GPP access.

12. A method according to any of claims 1 to 11, comprising:
- upon reception of said signalled PDN Gateway information, said HSS storing said PDN Gateway information.

13. A method according to any of claims 1 to 12, wherein:
- said PDN Gateway information includes, for said at least one PDN connection, a PDN identity or Access Point Name APN, and a PDN Gateway identity.

14. A Mobility Management Entity MME configured to:
- signal to a Home Subscriber Server HSS, PDN Gateway information for at least one PDN Gateway assigned to a User Equipment UE, retrieved from a Gn SGSN upon mobility of said UE from said Gn SGSN to said MME.

15. A Mobility Management Entity MME according to claim 14, configured to:
- signal said PDN Gateway information to said HSS in a Update Location Request message.

16. A Mobility Management Entity MME according to claim 14, configured to:
- signal said PDN Gateway information to said HSS in a Notify Request message, if the subscription data indicates that the user is allowed to perform handover to non-3GPP accesses, and if said PDN Gateway information is different from the PDN Gateway information which was indicated by the HSS in the PDN subscription context of said UE.

17. A Serving GPRS Support Node SGSN supporting S4 interface, referred to as S4 SGSN, configured to:
- signal to a Home Subscriber Server HSS, PDN Gateway information for at least one PDN Gateway assigned to a User Equipment UE, retrieved from a Gn SGSN upon mobility of said UE from said Gn SGSN to said S4 SGSN.

18. A S4 SGSN according to claim 17, configured to:
- signal said PDN Gateway information to said HSS in a Update Location Request message.

19. A S4 SGSN according to claim 17, configured to:
- signal said PDN Gateway information to said HSS in a Notify Request message, if the subscription data indicates that the user is allowed to perform handover to non-3GPP accesses, and if said PDN Gateway information is different from the PDN Gateway information which was indicated by the HSS in the PDN subscription context of said UE.

20. A Home Subscriber Server HSS, configured to:
- upon reception of said signalled PDN Gateway information, storing said PDN Gateway information when said signalled PDN Gateway information has been received in an Update Location or received from AAA server about an UE served by a 3GPP access.

21. A PDN Gateway/Gateway GPRS Support Node PGW/GGSN, configured to:
- upon activation via a Gn SGSN of a PDP context assigning said PGW/GGSN to a User Equipment UE, signal to a 3GPP AAA Server PDN Gateway information including Access Point Name APN and PGW/GGSN identity, with an indication that this is for 3GPP access.

22. A 3GPP AAA Server, configured to:
- upon reception from a Gateway GPRS Support Node GGSN of PDN Gateway information including Access Point Name APN and GGSN identity, signal said PDN Gateway information to a Home Subscriber Server HSS, with an indication that this is for 3GPP access.
